# EUROPEAN PATENT SPECIFICATION

(11) **EP 0 404 258 B1**
(45) Date of publication and mention of the grant of the patent: **28.09.1994**
(21) Application number: 90201601.3
(22) Date of filing: 19.06.1990
(51) Int. Cl.: B01L 3/14, G01N 21/03

(54) **Test-tube with lenticular outside surface particularly for automatized clinical analysis**
Prüfröhrchen mit einer linsenförmigen Aussenfläche, insbesondere für automatische klinische Analysen
Tube à essai avec surface extérieure lenticulaire, notament pour les analyses cliniques automatisées

(30) Priority: 20.06.1989 IT 6326189 U; 12.06.1990 IT 2060990
(43) Date of publication of application: 27.12.1990
(73) Proprietor: Bonini, Claudio, S.Martino Buon Albergo (Verona) (IT)
(72) Inventor: Bonini, Claudio, S.Martino Buon Albergo (Verona) (IT)
(74) Representative: Raimondi, Alfredo, Dott. Ing. Prof.

(56) References cited:
- EP-A- 0 102 764
- FR-A- 2 538 112
- GB-A- 2 114 734
- US-A- 2 748 074
- APPLIED SPECTROSCOPY, vol. 39, no. 3, May-June 1985, pages 426-430; T.HIRSCHFELD et al.: "Lens and wedge absorption cells for FT-IR spectroscopy"

## Description

The present invention relates to a cuvette which has lenticular external walls and is particularly suitable for clinical analyses to be performed by means of automatic instruments using light rays.

It is known that in the field of medical diagnosis increasing use is being made of automatic instruments capable of examining specimens of products such as blood, bacterial cultures and similar, and of performing statistical processing, the data relating to the specimen under examination being compared with those relating to known standard specimens to obtain a result for the particular case under examination.

These instruments are based on the principle of the emission of a light ray from a suitable element called the emitter and its passage through a specimen of a product placed in a test-tube of small dimensions and of a special form, called a cuvette, the ray passing through it and creating by diffraction a light spectrum which is detected by another element called the receiver; since this spectrum is dependent on the particular conditions of density, transparency and thickness of the contents of the cuvette, it is able, after appropriate processing carried out by known means, to represent the result of the analysis and to be expressed in a legible form, which may for example be numerical, for the end user.

In order to improve the precision of the analysis, attempts have been made to modify either the automatic equipment for the generation and focusing of the ray or the particular form of the cuvette in order to avoid interference by the cuvette with the passage of the light; in particular, there is known from EP-A-0 102 764 a cuvette of elongated form and rectangular section with small lateral and transverse dimensions and of restricted section, capable of containing a small amount either of the product to be examined or of the expensive reagents used for the analysis, and remaining as neutral as possible in relation to the ray which is to pass through it.

Such a cuvette, however, has serious drawbacks, especially for types of examination such as the erythrocyte sedimentation rate, or microbiological, coagulation and similar analyses for which it is convenient to have a very thin ray which must pass through the cuvette at a very precise point, or pass through the whole of it in the longitudinal direction to carry out scanning with examination of the horizontal bands of the product. There is, for example, the case, well known to experts in the field, of the meniscus formed within the cuvette by blood whose sedimentation rate is to be calculated, or that of the examination of the density of a bacterial culture for the determination of its development.

In the first case, the passage of the ray not through the vertex of the meniscus but in a direction deviating from this is a cause of percentage errors which may be significant; similarly, in the second case, if the ray which scans the cuvette is too wide it may cause large deviations of the measured statistical value from the real value.

FR-A-2 538 112 discloses a cell for mixing operations and optical examination comprising two mutually opposite, parallel end wall portions, which are transparent to radiation, and two mutually oposite side wall portions which together with said end wall portions define a measuring region.

Light is projected into the cell through one of the end wall portions. The side walls have an inwardly curved shape, where at least one side wall can be a positive lens. Such a lens promotes the internal directioning of scattered fluorescent light inside the cell.

Consequently there arises the technical problem of producing a cuvette for medical analysis capable of being used in conjunction with a light ray which passes through it, and of producing a variation in the direction of the ray in the most suitable direction for the type of analysis being performed, with the purpose of obtaining a more or less concentrated direct ray with greater precision, while the cuvette must also be of small size, must be capable of being produced cheaply and easily by automatic machinery, and must be capable of being used in the various types of automatic analytical instruments.

Such improved results are obtained with the present invention which specifies a cuvette of elongated form with a small rectangular internal section for medical and similar analyses to be performed by passing a light ray through a product to be examined, the cuvette having at least one larger external surface made in the form of a lens in the transverse direction and capable of deflecting the light ray in a preferred direction as it passes through the thickness of the cuvette and before it reaches the product through which it is to pass for the examination.

In particular, the cuvette according to the present invention may be made with external surfaces in the form of a lens which has a convex form symmetrical with respect to the longitudinal axis so that it deflects the light ray in a transverse focusing direction, or, alternatively, the lens may be made in a concave torn symmetrical with respect to the longitudinal axis so that it deflects the ray in a transverse diverging direction.

According to the present invention, the cuvette may also have opposed larger external surfaces which are formed so that one is concave and the other is convex in accordance with the concentrating or diverging effect to be achieved.

Further details are given in the following description which refers to the attached drawings, which show:
- in Figure 1:: a front view of a cuvette according to the present invention;
- in Figure 2:: a section of the cuvette shown in Fig. 1 in the plane shown by the line II-II;
- in Figure 3:: a plan view of the cuvette shown in Fig. 1 seen in the direction of the arrow A in Fig. 2;
- in Figure 4:: a section of the cuvette in the plane shown by the line IV-IV in Fig. 2;
- in Figure 5:: the cuvette shown in Fig. 2 with an illustration of the passage of the light ray in the case of a converging lens;
- in Figure 6:: a side view of a cuvette prepared for the investigation of a sedimentation rate;
- in Figure 7:: a section in a corresponding transverse plane of an alternative form of the cuvette shown in Fig. 1 with a diverging lens;
- in Figure 8:: a cuvette prepared for microbiological investigation of bacterial density.

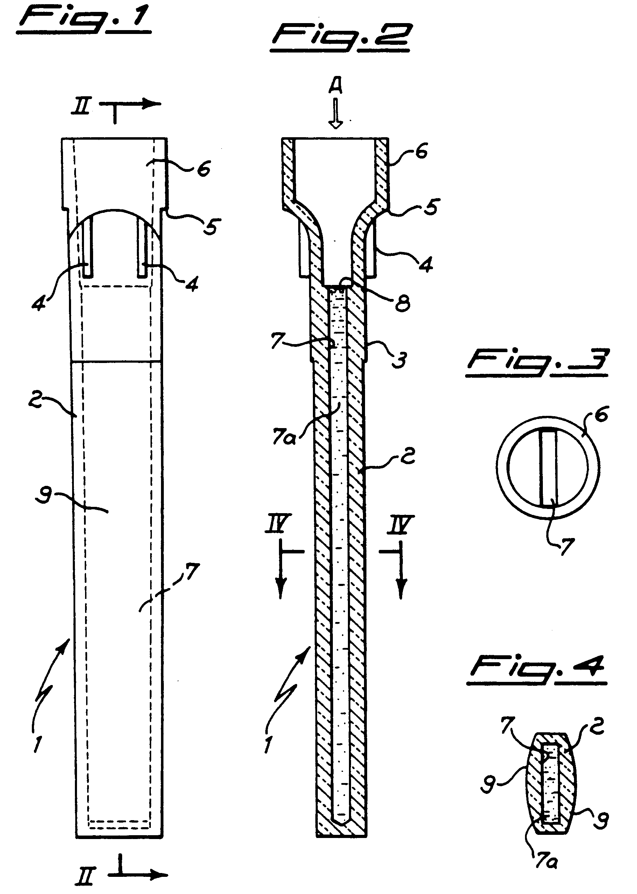

As shown in Figs. 1 and 2, a cuvette 1 according to the present invention comprises an elongated body 2 whose upper end is shaped to form three steps 3, 4 and 5 which provide supports of different sizes to be used for insertion of the cuvette in the appropriate holders in the automatic analytical machines which are already known and are therefore not illustrated.

The upper end 6 of the cuvette is circular in plan (Fig. 3) and can be stopped up with an ordinary test-tube stopper which is not illustrated.

Internally, the cuvette has a cavity 7 of rectangular form which is restricted in the direction of the thickness and which extends from the bottom upwards to a predetermined height indicated by a mark 8 made on the body of the cuvette and representing the level to which the cuvette 1 is to be filled with the product 7a to be examined.

In a preferred embodiment (Fig. 4) the larger external surfaces 9 of the cuvette 1 may conveniently be shaped in the form of convex lenses having axes and a focus arranged along the median transverse axis of the cavity 7 of the cuvette, the lenses being arranged symmetrically with respect to the longitudinal axis of the cuvette.

Thus a ray 10 (Fig. 5) which is sent from an emitter 11 and which may not be aligned with the transverse axis of the cuvette - because of the displacement and/or sinking, even partial, of the means of holding the cuvette in position, for example - will be focused towards the axis and directed through the product to be examined along the said axis, making the measurement constant and independent of alterations in the relative positioning of the cuvette and the measuring instrument, and also independent of the shape of the upper meniscus.

Having passed through the product 7a, the ray encounters the opposite lenticular surface and is again returned to the axis with respect to a receiver 12 which is arranged in alignment with the emitter 11.

The arrangement described above is particularly suitable for examinations in which the lengths of regions of products at different concentrations are measured and related to each other, for example in the determination of the sedimentation rate, in which, as has been said, the product tends to form a U-shaped meniscus (Fig. 6) and the fact that the ray 11a encounters the product 7a in a position other than that corresponding to the vertex of the meniscus (ray 11b) causes an alteration of the dimension "a" which is reflected in the ratio a/b which is functionally dependent on the rate to be determined, thus significantly altering the final result.

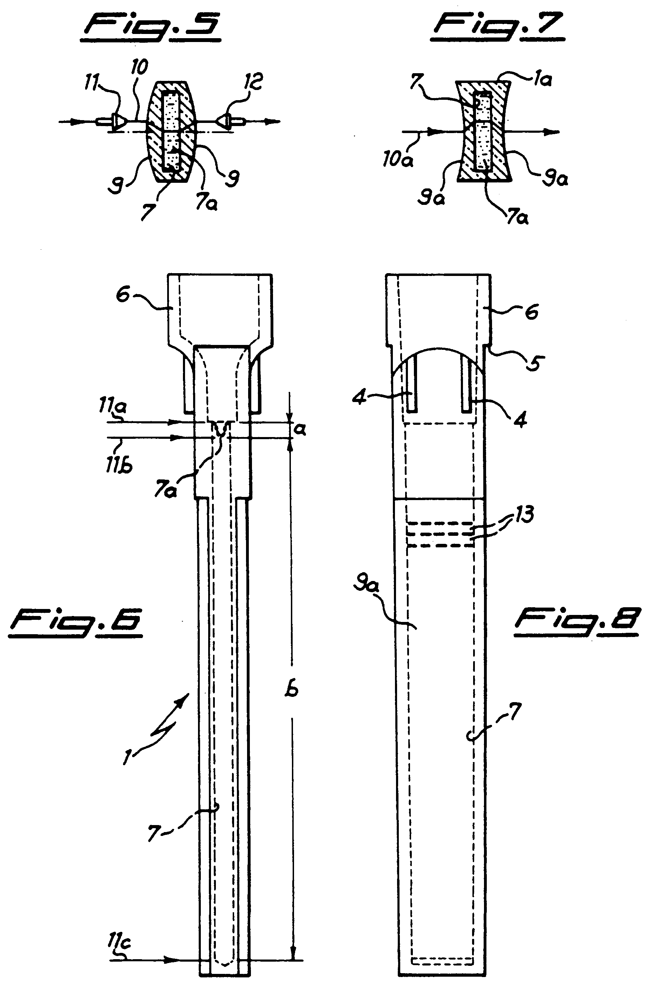

In an alternative embodiment (Fig. 7), the external surface of the cuvette 1 is made in the form of concave lenses 9a equally opposed with respect to the longitudinal axis of the cuvette; thus a ray 10a from the emitter 11 may be deflected in the direction of the lateral wall 1a of the cuvette 1, enabling a light ray of equal diameter to be used to examine a horizontal region 13 of the product whose width is greater than in ordinary flat cuvettes.

This is particularly useful in the case of microbiological investigations of the type performed for the determination of the development of bacteria in different cultures, since, owing to the disordered way in which the bacteria may be arranged in the cuvette, an examination of a wider surface provides greater precision of measurement, the deviations of the measured statistical value from the mean being less than those found without deflection of the ray and consequently for a more restricted area.

Many modifications may be made to the present invention without thereby departing from the scope of its general characteristics; in particular, it will be possible to produce cuvettes with external opposing surfaces in the form of any combination of lenses capable of providing a deflection of light rays which is particularly suitable to the specific investigation to be performed.

## Claims

1. A cuvette (1) of elongated form with a small internal section for medical and similar analyses performed by passing a light ray (10) through a product (7a) to be examined, having at least an external surface (9) in the form of a lens in the transverse direction said lens is extended along the longitudinal dimension of the cuvette (1) characterised by the fact that said internal section is rectangular, and that this lens deflecting the light ray in a preferred direction as it passes through the thickness of the lens and before it reaches the product through which it is to pass for the examination.

2. A cuvette of elongated form with a small rectangular internal section for medical and similar analyses according to claim 1, characterized in that the form of the lens is convex and symmetrical with respect to the longitudinal axis so that it deflects the light ray in a transverse focusing direction.

3. A cuvette of elongated form with a small rectangular internal section for medical and similar analyses according to claim 1, characterized in that the form of the lens is concave and symmetrical with respect to the longitudinal axis so that it deflects the ray in a transverse diverging direction.

4. A cuvette of elongated form with a small rectangular internal section for medical and similar analyses according to claim 1, characterized in that the longitudinal opposed external surfaces are made so that one is concave and the other is convex in accordance with the concentrating or diverging effect to be obtained.

## Patentansprüche

1. Eine Küvette (1) von langgestreckter Form mit einem kleinen Innenquerschnitt für medizinische und ähnliche Analysen, welche durch Hindurchschicken eines Lichtstrahles (10) durch ein zu überprüfendes Produkt (7a) durchgeführt werden, mit mindestens einer äußeren Oberfläche (9) in der Form einer Linse in der Quer-Richtung, wobei die genannte Linse sich entlang der Längs-Ausdehnung der Küvette (1) erstreckt,
**gekennzeichnet durch**
die Tatsache, daß der genannte Innenquerschnitt rechteckförmig ist und daß diese Linse den Lichtstrahl in einer bevorzugten Richtung ablenkend ist, wenn er durch die Dicke der Linse hindurchgeht und bevor er das Produkt erreicht, durch welches er für die Prüfung hindurchzuschicken ist.

2. Eine Küvette von langgestreckter Form mit einem kleinen rechteckförmigen Innenquerschnitt für medizinische und ähnliche Analysen, gemäß Anspruch 1,
**dadurch gekennzeichnet,**
daß die Form der Linse konvex und in Bezug auf die Längsachse symmetrisch ist, so daß sie den Lichtstrahl in einer quer gerichteten Fokussierungsrichtung ablenkt.

3. Eine Küvette von langgestreckter Form mit einem kleinen rechteckförmigen Innenquerschnitt für medizinische und ähnliche Analysen, gemäß Anspruch 1,
**dadurch gekennzeichnet,**
daß die Form der Linse konkav und symmetrisch in Bezug auf die Längsachse ist, so daß sie den Strahl in einer quer gerichteten divergierenden Richtung ablenkt.

4. Eine Küvette von langgestreckter Form mit einem kleinen rechteckförmigen Innenquerschnitt für medizinische und ähnliche Analysen, gemäß Anspruch 1,
**dadurch gekennzeichnet,**
daß die in Längsrichtung verlaufenden, einander entgegengesetzten äußeren Oberflächen so ausgebildet sind, daß gemäß der zu erzielenden konzentrierenden oder divergierenden Wirkung die eine konkav und die andere konvex ist.

## Revendications

1. Un tube à essai (1) de forme allongée de petite section intérieure pour analyses médicales et analogues effectuées par passage d'un rayon lumineux (10) à travers un produit (7a) à examiner, présentant au moins une surface extérieure (9) en forme de lentille dans la direction transversale, ladite lentille s'étendant le long de la dimension longitudinale du tube à essai (1), caractérisé par le fait que ladite section intérieure est rectangulaire et en ce que cette lentille dévie le rayon lumineux dans une direction préférée lorsqu'il traverse l'épaisseur de la lentille et avant d'atteindre le produit à travers lequel il doit passer en vue de l'examen.

2. Un tube à essai de forme allongée de petite section intérieure rectangulaire pour analyses médicales et analogues selon la revendication 1, caractérisé en ce que la forme de la lentille est convexe et symétrique par rapport à l'axe longitudinal de sorte qu'elle dévie le rayon lumineux dans une direction transversale convergente.

3. Un tube à essai de forme allongée de petite section intérieure rectangulaire pour analyses médicales et analogues selon la revendication 1, caractérisé en ce que la forme de la lentille est concave et symétrique par rapport à l'axe longitudinal de sorte qu'elle dévie le rayon dans une direction transversale divergente.

4. Un tube à essai de forme allongée de petite section intérieure rectangulaire pour analyses médicales et analogues selon la revendication 1, caractérisé en ce que les surfaces extérieures longitudinales opposées sont réalisées pour que l'une soit concave et que l'autre soit convexe selon l'effet de la convergence ou de la divergence à obtenir.
